# EUROPÄISCHE PATENTSCHRIFT

(11) **EP 1 304 024 B1**
(45) Veröffentlichungstag und Bekanntmachung des Hinweises auf die Patenterteilung: **11.05.2005**
(21) Anmeldenummer: 02102451.8
(22) Anmeldetag: 15.10.2002
(51) Int. Cl.: A01B 35/22

(54) **Befestigungszusammenbau für ein Bodenbearbeitungswerkzeug**
Soil working tool fitting
Assemblage de fixation pour outil de travail du sol

(30) Priorität: 19.10.2001 US 982901
(43) Veröffentlichungstag der Anmeldung: 23.04.2003
(73) Patentinhaber: DEERE & COMPANY, Moline, Illinois 61265-8098 (US)
(72) Erfinder: Zaun, Richard David, West Des Moines, IA 50265 (US); Poutré, Benoit, Ankeny , IA 50021 (US); Peck, Donald Ray, Clive , IA 50325 (US); Beeck, Mark, Ankeny , IA 50021 (US); Hook, Richard Wayne, West Des Moines , IA 50265 (US); VanAuwelaer, James Michael, Ankeny , IA50021 (US); Ruckle, Jarrod Ray, Vassar , MI 48768 (US)
(74) Vertreter: Holst, Sönke, Dr.

(56) Entgegenhaltungen:
- EP-A- 1 082 889
- DE-C- 56 416
- US-A- 2 877 061
- US-A- 3 371 723
- US-A- 5 007 484

## Beschreibung

Die Erfindung betrifft einen Befestigungszusammenbau für ein Bodenbearbeitungswerkzeug, mit einem Träger, einem lösbar daran befestigbaren, mit dem Bodenbearbeitungswerkzeug verbundenen Befestigungsabschnitt, und einer Halterungseinrichtung, die verhindert, dass sich das Bodenbearbeitungswerkzeug vom Träger löst.

Standardzusammenbauten für Bodenbearbeitungsgeräte wie Meißelpflüge und Feldkultivatoren umfassen typischerweise einen gefederten Schaftzusammenbau, der sich nach unten bis zu einem das Werkzeug aufnehmenden Ende erstreckt, an dem eine Schaufel, Spitze oder ein Schar befestigt ist. Bisher erhältliche Befestigungsstrukturen umfassen Bolzen, die sich durch Löcher im Werkzeug und im Schaft erstrecken, um das Werkzeug zu sichern. Wenn das Werkzeug in einem derartigen Zusammenbau wegen Abnutzung oder Beschädigung zu ersetzen ist, müssen die Bolzen entfernt werden. Abnutzung und Korrosion der Bolzen behindert ihre Entfernung und macht den Austausch häufig zu einer schwierigen und zeitaufwändigen Aufgabe.

Verschiedene Lösungen des Problems eines leichten und schnellen Austauschs abgenutzter Elemente wie Schare an Schäften wurden über die Jahre entwickelt, einschließlich Adapterhaltern, die eine selbstverriegelnde Passung mit einer passenden Verjüngung an durch Schläge aufzusetzenden Werkzeugen bereitstellen. Zerbrechbare Stifte und Bolzen wurden ebenfalls vorgeschlagen. Die meisten der Halterungselemente litten jedoch unter einem oder mehreren Problemen, einschließlich des Bedarfs an weiteren Teilen und des Verlusts von Werkzeugen, wenn sie während des Transports und während der Neuausrichtung des Schafts aus einer Ausweichposition hohe Abnahmekräfte erfahren. Um die Fälle zu reduzieren, in denen Werkzeuge von den Schäften an Schnellbefestigungsanordnungen herabfallen, haben manche Hersteller Rastmechanismen angeboten, wie einen Halteclip in Form eines metallischen Blechstanzstücks mit einem kugelförmigen Vorsprung, der in ein Loch im Werkzeug passt. Um das Werkzeug zu lösen, wird ein Schraubendreher oder ein anderes Werkzeug verwendet, um den Clip niederzudrücken und den Vorsprung von dem Loch fortzubewegen. Andere Rastmechanismen werden beispielsweise in der US 3 061 021 A und US 6 289 996 B gezeigt. Derartige Rastmechanismen helfen im Allgemeinen dabei, die Werkzeuge an den Schäften zu haltern, jedoch können die Kräfte derart groß sein, insbesondere bei Tiefbodenbearbeitungswerkzeugen, dass das Werkzeug trotzdem nicht auf dem Schaft verbleibt. Die Geometrie der meisten bisher erhältlichen Werkzeugverrastanordnungen, einschließlich nicht symmetrischer, zusammenpassender Oberflächen an einigen von ihnen, begrenzt in der Regel das Eindringen der haltenden Oberfläche in das Loch, so dass die halternden Kräfte begrenzt sind. Einige Sorgfalt muss auf das Ausrichten des Vorsprungs im Loch verwendet werden, und Bauteiltoleranzen, Variationen in den zum Befestigen des Werkzeugs verwendeten Kräften oder fehlende Ausrichtung des Clips gegenüber dem Schaft können eine derartige Ausrichtung problematisch machen. Eine relativ kleine, ansteigende Kontaktfläche zwischen dem Clip und dem Loch vergrößert auch das Potential für einen Verlust des Werkzeugs. Boden, der sich nach oben und um den Fußteil des Werkzeugs herum bewegt, kann den Clip aus der Rastposition bewegen oder den Clip abschleifen, bis der Clip nicht mehr in der Lage ist, das Werkzeug am Schaft zu halten. Extreme Kräfte auf den Rastmechanismus, wie solche, die beim Neuausrichten auftreten, können auch Verformungen des Rastmechanismus bedingen. Wenn sich der Rastmechanismus verformt, können gelöste Werkzeuge in nicht akzeptabler Weise am Schaft baumeln oder verloren gehen. Eine schwere Rastkonstruktion oder häufige Wechsel des Rastmechanismus sind daher gewöhnlich erforderlich.

Die der Erfindung zu Grunde liegende Aufgabe wird darin gesehen, eine verbesserte Halterungsanordnung für ein Werkzeug bereitzustellen, bei dem einige oder alle der oben genannten Probleme nicht zu erwarten sind.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein erfindungsgemäßer Befestigungszusammenbau umfasst einen aus Drahtfedermaterial hergestellten Halter, der an einem - in der Regel über einen Schaft mit einem Werkzeugträger verbundenen - Träger anliegt. Ein vorgespanntes Kontaktende des bogenförmigen Halters liegt an einer Kontaktfläche des Befestigungsabschnitts an, der das Bodenbearbeitungswerkzeug trägt, um an dieser Kontaktfläche anzugreifen und Werkzeugverlustprobleme zu vermeiden, indem es verhindert, dass das Bodenbearbeitungswerkzeug aus seiner Befestigungsposition nach unten verrutscht.

Auf diese Weise erhält man einen einfachen, preiswerten und zuverlässigen Drahthalter.

Vorzugsweise ist im Träger eine Öffnung vorgesehen, durch die sich das Kontaktende des bogenförmigen Drahthalters erstreckt. Die übrigen Teile des Drahthalters bilden zweckmäßigerweise einen bogenförmigen Basisabschnitt und sind an der der Spitze des Bodenbearbeitungswerkzeugs abgewandten Fläche des Trägers angeordnet. An dieser Fläche kann eine Nut vorhanden sein, in der sich der Basisabschnitt des Drahthalters befindet. Die Nut erspart eine separate Befestigung für den Drahthalter in Form eines Bolzens oder eines Kontakts mit einem Bolzen und verbessert die Leichtigkeit des Zusammenbauens, die Positionierung und die Verschleißfestigkeit des Drahthalters. Der Drahthalter kann leicht in seine Position am Träger geschoben werden.

Die Kontaktfläche des Befestigungsabschnitts weist vorzugsweise einen Schlitz auf, an dessen rückwärtiger Kante das Kontaktende des Drahthalters in der verrasteten Position anliegt. Um die Kante und das Kontaktende des Drahthalters vor Abnutzung zu schützen und zu verhindern, dass Boden und Verunreinigungen das Kontaktende niederdrücken und entriegeln, ist ein Abschnitt des Befestigungsabschnitts gegenüber dessen übriger Oberfläche und dem Kontaktende erhaben. Der erhabene Abschnitt leitet den Boden und die Verunreinigungen vom Schlitz fort. Die Unterseite des angehobenen Abschnitts definiert eine kanalförmige Führungs- und Trägerfläche für den Drahthalter, die das Kontaktende in der optimalen Position zum Verrasten der Halterungseinrichtung hält und eine Abstützung für den Drahthalter bereitstellt, um Verformungen des Drahthalters zu vermeiden, wenn hohe Kräfte beim Arbeitsbetrieb aufzunehmen sind, die zum Abziehen des Bodenbearbeitungswerkzeugs bestrebt sind. Der Bediener kann klar erkennen, ob das Bodenbearbeitungswerkzeug korrekt am Träger verkeilt ist, indem er sich einfach die Position des Kontaktendes gegenüber der Kontaktfläche des Befestigungsabschnitts und der kanalförmigen Führungs- und Trägerfläche ansieht.

Bei einer bevorzugten Ausführungsform umfasst ein mittiger Abschnitt unmittelbar unterhalb des Trägers ebenfalls eine erhabene Fläche, die dabei hilft, Material vom Träger fortzuleiten, um dessen Lebensdauer zu verlängern und die Abnutzung im Bereich des Schlitzes und am Ende des Drahthalters zu vermindern.

Um das Bodenbearbeitungswerkzeug abzunehmen, kann ein Entfernungswerkzeug durch den Schlitz eingesetzt werden, um das Kontaktende des Drahthalters niederzudrücken. Dann wird das Bodenbearbeitungswerkzeug nach unten vom Träger abgenommen, in der Regel durch Hammerschläge. Andererseits kann ein Anbringungswerkzeug auf das Bodenbearbeitungswerkzeug aufgesetzt werden, das die Hammerschläge aufnimmt, die das Bodenbearbeitungswerkzeug auf den Träger schieben.

In den Zeichnungen sind zwei nachfolgend näher beschriebenes Ausführungsbeispiele der Erfindung dargestellt. Es zeigt:
- Fig. 1: eine seitliche perspektivische Ansicht des unteren Abschnitts eines Schaftzusammenbaus einschließlich eines Bodenbearbeitungswerkzeugs und einer Werkzeughalterungsanordnung, die entsprechend der Lehre der vorliegenden Erfindung aufgebaut ist,
- Fig. 2: eine vergrößerte perspektivische Ansicht eines Abschnitts des Zusammenbaus aus Figur 1 von unten, die teilgeschnitten ist, um die Werkzeughalterungsanordnung besser zu zeigen, einschließlich eines Abschnitts eines Werkzeugentfernungswerkzeugs,
- Fig. 3: eine Draufsicht auf die Halterung für die Zusammenbauten der Figuren 1 und 2,
- Fig. 4: eine seitliche Ansicht der Halterung aus Figur 3,
- Fig. 5: eine perspektivische Ansicht der Halterung aus Figur 3,
- Fig. 6: eine vergrößerte perspektivische Ansicht des Werkzeugentfernungswerkzeugs aus Figur 2, und
- Fig. 7: eine Ansicht ähnlich der aus Figur 1 einschließlich einer modifizierten Version eines Werkzeugs mit Einrichtungen zum Anbringen und Entfernen des Werkzeugs und zum Entfernen von Verunreinigungen, wobei das Werkzeug in einer Position zum Anbringen des Werkzeugs gezeigt ist.

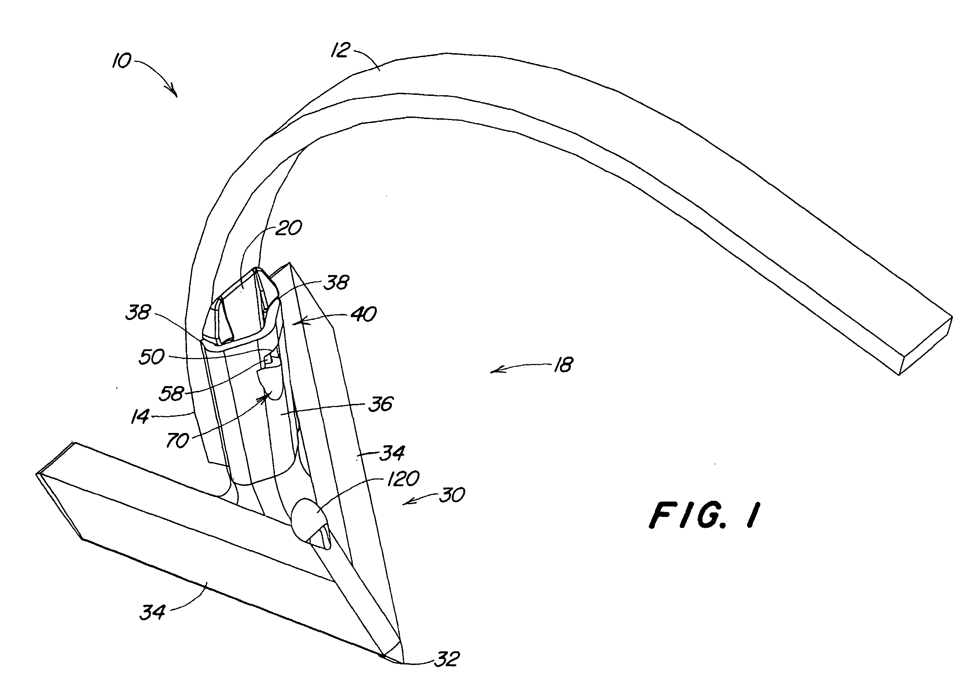

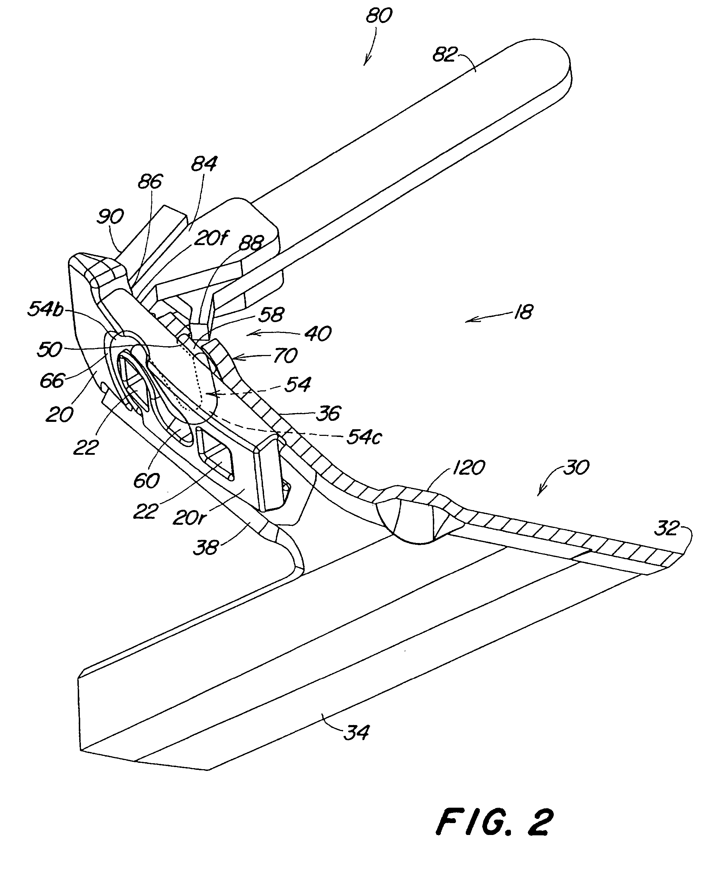

Es wird nun auf Figur 1 Bezug genommen, in der der untere Abschnitt eines gefederten Schaftzusammenbaus 10 einschließlich eines Schafts 12 mit einem unteren Werkzeug haltenden Ende 14 gezeigt ist, das einen durch Schläge aufzusetzenden Bodenbearbeitungswerkzeugzusammenbau 18 trägt. Der Zusammenbau 18 umfasst einen keilförmigen Adapterhalter oder Träger 20, der eine rückwärtige Fläche aufweist, die der nach vorn gewandten Fläche des Endes 14 entspricht. Der Träger 20 ist an dem Ende 14 durch zwei (nicht gezeigte) Pflugbolzen befestigt, die sich durch Öffnungen 22 (Figur 2) im Träger 20 und entsprechende Öffnungen im Ende 14 des Schafts 12 erstrecken. Ein Bodenbearbeitungswerkzeug 30, das in den Figuren 1 und 2 als Gänsefußschar dargestellt ist, umfasst eine vorderste Spitze 32 und gegenüberliegende Flügelabschnitte 34, die in der rückwärtigen Richtung nach außen divergieren. Ein nach unten und hinten konkaver Befestigungsabschnitt 36 oder Fuß umfasst Kanten 38, die den Träger 20 teilweise umschließen. Der Befestigungsabschnitt 36 stellt eine Keilpassung zwischen dem Bodenbearbeitungswerkzeug 30 und dem unteren Ende 14 des Schafts 12 bereit, wenn das Bodenbearbeitungswerkzeug 30 auf den Träger 20 geschlagen wird. Der Befestigungsabschnitt 36 wird an dem Träger 20 nach oben geschoben und dann wird das Bodenbearbeitungswerkzeug 30 durch mehrere scharfe Schläge eines Hammers nach oben und hinten getrieben, um das Bodenbearbeitungswerkzeug 30 in der Befestigungsposition auf dem Schaft 12 zu verkeilen.

Der Befestigungsabschnitt 36 und der Träger 20 haltern das Bodenbearbeitungswerkzeug 30 fest am Ende 14 ohne einen Bedarf an direkt am Bodenbearbeitungswerkzeug 30 angebrachten Befestigungsbolzen. Da derartige Befestigungsbolzen eliminiert sind, können die Bodenbearbeitungswerkzeuge 30 schnell vom Träger 20 getrieben und leicht ersetzt werden. Jedoch können Neuausrichtungskräfte und dergleichen die Keilpassung bei der Arbeit auf dem Feld lösen. Um einen Verlust des Werkzeugs 30 zu verhindern, wenn sich die Keilpassung beim Betrieb löst, ist eine insgesamt mit 40 gekennzeichnete Halterungseinrichtung bereitgestellt. Die normalen Kräfte, die auf ein im Boden arbeitendes Bodenbearbeitungswerkzeug 30 wirken, tendieren dahin, das Bodenbearbeitungswerkzeug nach hinten in die Keilpassung oder Befestigungsposition zu zwingen, wenn das Bodenbearbeitungswerkzeug nach der unbeabsichtigten Lösung auf dem Träger 20 festgehalten werden kann.

Die Halterungseinrichtung 40 umfasst eine Kontaktfläche 50, die am oberen Abschnitt des Fußes oder Befestigungsabschnitts 36 mittig angeordnet ist. Ein aus Federstahl hergestellter, bogenförmiger Drahthalter 54 mit einem im Wesentlichen runden Querschnitt wird von dem Träger 20 abgestützt und umfasst ein Kontaktende 58, das gegenüber der oberen bzw. vorderen Oberfläche des Trägers 20 nach vorn versetzt und darüber angeordnet ist. Das Kontaktende 58 ist in eine Verriegelungsposition (Figur 1 und 2) vorgespannt, in der das Kontaktende 58 an der dazu passenden Kontaktfläche 50 anliegt, wenn sich das Bodenbearbeitungswerkzeug 30 in der Befestigungsposition befindet, wie gezeigt. Die Oberflächen der Kontaktfläche 50 und des Kontaktendes 58 sind vorzugsweise parallel zueinander, wenn sie sich im Kontakt befinden. Der Kontakt verhindert, dass sich das Bodenbearbeitungswerkzeug 30 aus der befestigten Position fortbewegt, bis das Kontaktende 58 gegen die Vorspannung in Richtung auf den Träger 20 zu bewegt ist.

Der Träger 20 umfasst eine zwischen den Öffnungen 22 zur Aufnahme der Pflugbolzen angeordnete Öffnung 60 (Figur 2), und der bogenförmige Drahthalter 54 umfasst einen mittigen Abschnitt 54c, der aus der Öffnung 60 herausragt. Der bogenförmige Drahthalter 54 umfasst einen bogenförmigen Basisabschnitt 54b, der im Wesentlichen in einer Fläche liegt. Der Träger 20 hat eine Vorderseite 20f, die dem Befestigungsabschnitt 36 oder Fuß zugewandt ist und eine gegenüberliegende Rückseite 20r, und der Basisabschnitt 54b des bogenförmigen Drahthalters 54 ist in einer bogenförmigen Nut 66 abgestützt, die die obere Öffnung 22 zur Aufnahme eines Pflugbolzens an der Rückseite 20r umrundet. Der Basisabschnitt 54b des bogenförmigen Drahthalters 54 ist zwischen der nach vorn gewandten Fläche des Endes 14 des Schafts 12 und der Nut 66 eingeschlossen, wenn der Träger 20 am Schaft 12 angebracht ist. Dadurch wird eine gute Abstützung und Positionierung des Drahthalters 54 bereitgestellt, unabhängig von irgendwelchen separaten Befestigungen oder eines Bedarfs an Kontakt mit einem Pflugbolzen. Während des Zusammenbaus wird das Kontaktende 58 des bogenförmigen Drahthalters 54 einfach durch die Öffnung 60 eingesetzt, und der Basisabschnitt 54b wird in der Nut 66 positioniert.

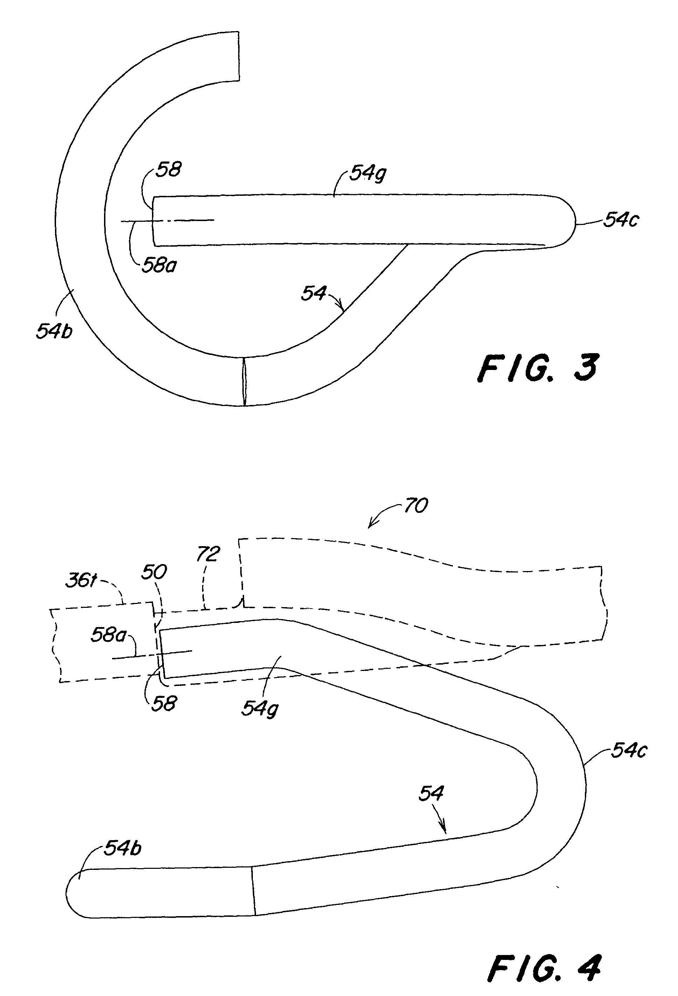

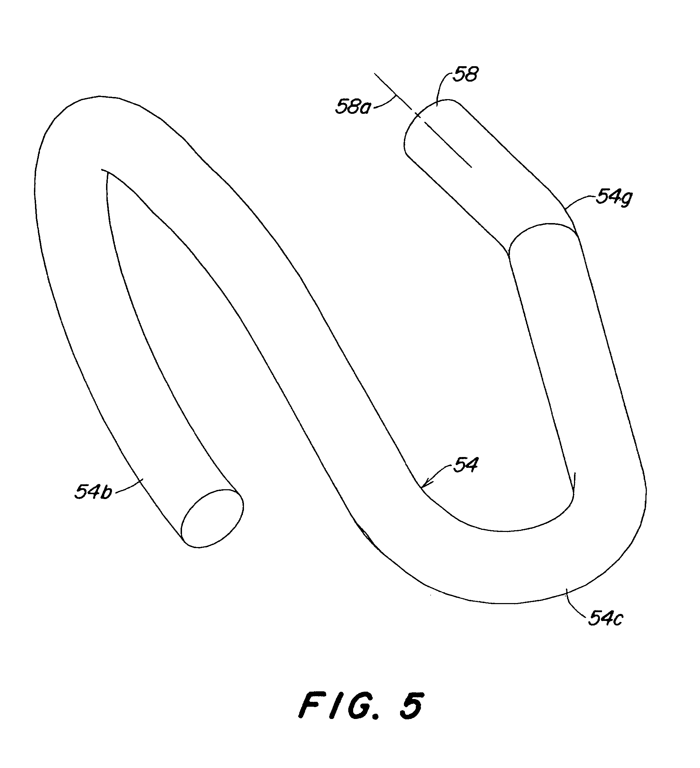

Der Befestigungsabschnitt 36 des Bodenbearbeitungswerkzeugs 30 umfasst eine angehobene Bodenablenkfläche 70, die ebenfalls eine Führungs- und Trägerfläche für den Drahthalter 54 an der Unterseite der angehobenen Bodenablenkfläche 70 definiert. Die Unterseite der angehobenen Bodenablenkfläche 70 ist nach unten und hinten konkav und öffnet sich in der rückwärtigen Richtung auf die Kontaktfläche 50 (s. Figuren 2 und 4) zu. Die Unterseite der Bodenablenkfläche 70 nimmt einen Abschnitt des bogenförmigen Drahthalters 54 an einer gegenüber dem Kontaktende 58 versetzten Stelle 54g auf und führt das Kontaktende 58 in Richtung auf die Kontaktfläche 50 zu, wenn das Bodenbearbeitungswerkzeug 30 in Richtung auf die verkeilte Befestigungsposition getrieben wird. Der Drahthalter 54 ist benachbart der Stelle 54g bogenförmig (s. Figuren 4 und 5), so dass die Achse 58a des Kontaktendes 58 im Wesentlichen senkrecht zur Ebene der Kontaktfläche 50 ist. Die Kontaktfläche 50 ist vorzugsweise die rückwärtige Kante eines Schlitzes 72, der rückwärtig nahe der angehobenen Bodenablenkfläche 70 angeordnet ist. Die Oberseite der Kante liegt entlang der Oberfläche 36t des Befestigungsabschnitts 36 und wird von der angehobenen Bodenablenkfläche 70 geschützt, die sich in einer beträchtlichen Entfernung oberhalb der Oberfläche erstreckt, um Schmutz und Verunreinigungen von der Kante und dem Drahthalter 54 abzulenken.

Die rückwärtige Fläche des Kontaktendes 58 ist parallel zur Ebene der Kontaktfläche 50, wenn das Bodenbearbeitungswerkzeug 30 befestigt ist und sich das Kontaktende 58 des bogenförmigen Drahthalters 54 in der Verriegelungsposition befindet. Wenn das Bodenbearbeitungswerkzeug 30 nach oben und hinten auf den Träger 20 getrieben wird, wird das Kontaktende 58 nach oben gezwungen, bis die Kontaktfläche 50 am Kontaktende 58 des Drahthalters 54 vorbeiläuft. Die Stelle 54g federt dann in die kanalförmige Unterseite der Bodenablenkfläche 70, so dass das Kontaktende 58 gegenüber der Kontaktfläche 50 in der geeigneten Position gehalten wird (Figur 4). Wenn das Bodenbearbeitungswerkzeug 30 anfängt, sich aus der verkeilten Position nach unten zu bewegen, hält der Kontakt zwischen dem Kontaktende 58 und der Kontaktfläche 50 das Bodenbearbeitungswerkzeug 30 in unmittelbarer Nähe der vollständig verkeilten Position, bis die während des Betriebs auf das Bodenbearbeitungswerkzeug 30 wirkenden Kräfte das Bodenbearbeitungswerkzeug 30 wieder in der verriegelten Position verkeilen. Die kanalförmige Unterseite bei 70 trägt auch das Kontaktende 58 des Drahthalters 54 an im Wesentlichen auf der Achse liegenden Punkten, um den Drahthalter 54 dabei zu unterstützen, Knickmomenten zu widerstehen, die anderenfalls auftreten würden, wenn starke Kräfte wirken, wie Neuausrichtungskräfte, die bestrebt sind, das Bodenbearbeitungswerkzeug 30 zu verrücken. Ohne die Abstützung der kanalförmigen Unterseite könnte der Drahthalter 54 durch die Kräfte leicht verformt werden.

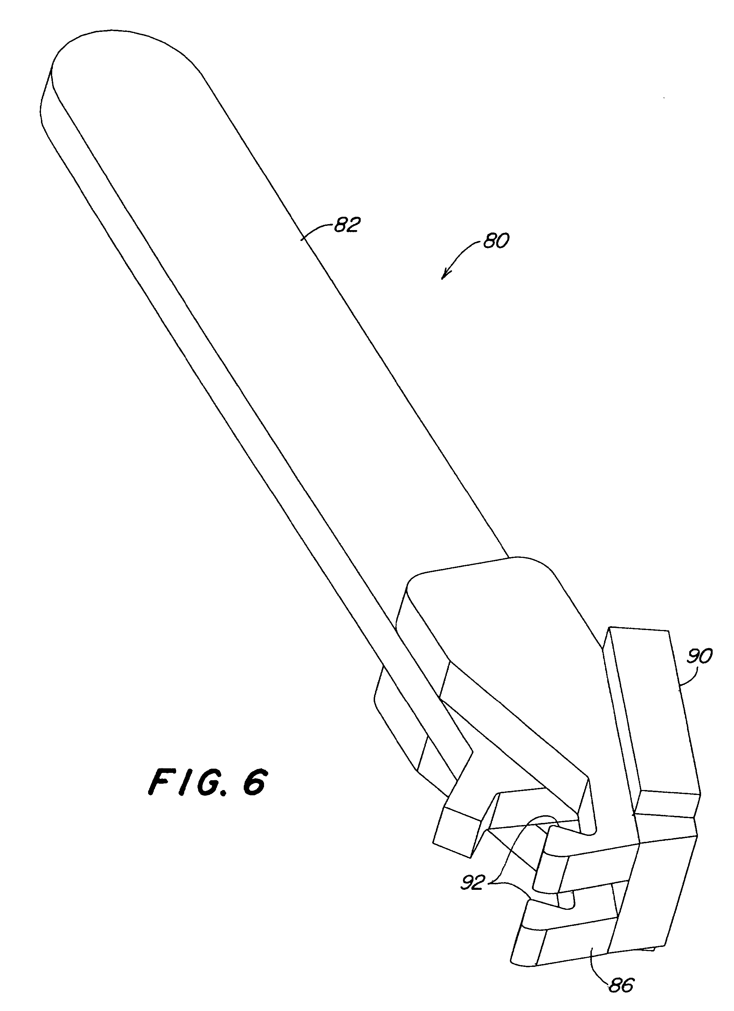

Es wird auf die Figuren 2 und 6 Bezug genommen, in denen ein Entfernungswerkzeug 80 gezeigt ist, das einen Handgriff 82 umfasst, der ein Entfernungsende 84 mit einem zum Positionieren am Schaftzusammenbau 10 eingerichteten Träger 86 trägt, sowie eine Verlängerung 88 zum Niederdrücken des Drahthalters 54, die oberhalb des Schlitzes 72 und des Kontaktendes 58 angeordnet ist. Der Handgriff 82 wird auf das Bodenbearbeitungswerkzeug 30 zu bewegt, um das Ende des Drahthalters 54 unterhalb der Kontaktfläche 54 niederzudrücken. Ein Hammer wird dann benutzt, um Stöße auf eine flache Oberfläche 90 oberhalb des Entfernungsendes 84 aufzubringen, um das Bodenbearbeitungswerkzeug 30 vom Schaftzusammenbau 10 zu treiben. Quer beabstandete Ansätze 92 greifen an der oberen Kante des Befestigungsabschnitts 36 an zwecks aktiver Positionierung des Entfernungswerkzeugs 80 und Eingriff am Bodenbearbeitungswerkzeug 30 und guter Verteilung der Stoßkräfte.

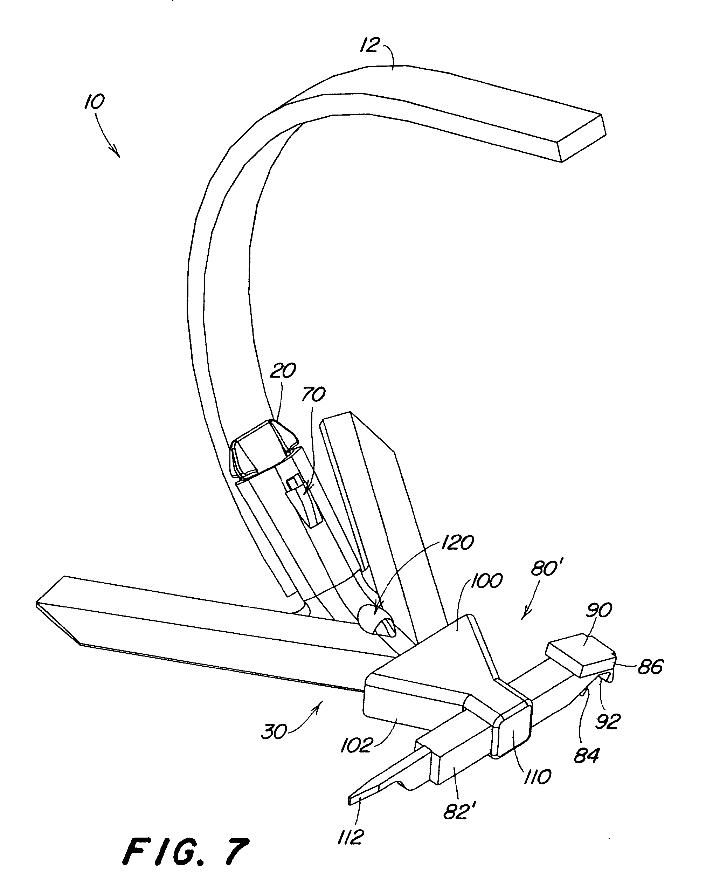

Bei einer alternativen Ausführungsform 80', die in Figur 7 gezeigt ist, ist ein Anbringwerkzeug 100 von dem Handgriff 82' abgestützt und umfasst ein V-förmiges Element 102, das im Wesentlichen mit dem vorderen Bodeneingriffsabschnitt des Bodenbearbeitungswerkzeugs 30 übereinstimmt und eingerichtet ist, über das Bodenbearbeitungswerkzeug 30 verschiebbar aufgenommen zu werden, wie gezeigt. Eine abgeflachte Stoßfläche 110 ist gegenüber der Spitze des Bodenbearbeitungswerkzeugs an der dem Element 102 gegenüberliegenden Seite des Handgriffs 82' versetzt angeordnet. Nach dem Aufschieben des Bodenbearbeitungswerkzeugs 30 auf den Träger 20 kann der Bediener das Bodenbearbeitungswerkzeug 30 in der gesicherten Position verkeilen, indem er die Stoßfläche 110 mit mehreren scharfen Schlägen eines Hammers trifft. Das Element 102 verdeckt die vorlaufende Spitze und die Kantenfläche, verteilt die treibenden Kräfte und schützt das Bodenbearbeitungswerkzeug 30 vor Beschädigungen. Ein Ende 112 zur Anbringung eines Schraubendrehers, das in Bodeneingriff kommt, ist am vorderen Ende des Handgriffs 82' gegenüber dem Entfernungsende 84 angebracht.

Eine zusätzliche angehobene Fläche 120 ist auf der Oberfläche des Bodenbearbeitungswerkzeugs 30 rückwärtig der Spitze 32 unmittelbar unterhalb der Fläche angeordnet, an der Befestigungsabschnitt 36 mit dem Rest des Bodenbearbeitungswerkzeugs 30 verbunden ist. Die angehobene Fläche führt Boden und Verunreinigungen vom Befestigungsabschnitt 36 nach außen, um dessen Lebensdauer zu vergrößern. Zusätzlich unterstützt die Fläche 120 die angehobene Fläche 70 dabei, Boden von dem Drahthalter 54 und der Kontaktfläche 50 zu leiten, um eine zuverlässigere Befestigung des Bodenbearbeitungswerkzeugs 30 und eine vergrößerte Lebensdauer der Halterung des Bodenbearbeitungswerkzeugs zu erzielen. Diese angehobene Fläche kann zusammen mit beliebigen anderen Halterungseinrichtungen 40 verwendet werden.

## Patentansprüche

1. Befestigungszusammenbau (10) für ein Bodenbearbeitungswerkzeug (30), mit einem Träger (20), einem lösbar daran befestigbaren, mit dem Bodenbearbeitungswerkzeug (30) verbundenen Befestigungsabschnitt (36), und einer Halterungseinrichtung (40), die verhindert, dass sich das Bodenbearbeitungswerkzeug (30) vom Träger (20) löst, **dadurch gekennzeichnet, dass** die Halterungseinrichtung (40) einen am Träger (20) abgestützten, bogenförmigen Drahthalter (54) umfasst, der ein gegenüber dem Träger (20) versetztes Kontaktende (58) aufweist, das in eine Rastposition vorgespannt ist, in der es bei befestigtem Bodenbearbeitungswerkzeug (30) an einer Kontaktfläche (50) des Befestigungsabschnitts (36) anliegt, und das verhindert, dass sich das Bodenbearbeitungswerkzeug (30) aus der befestigten Stellung bewegt, solange nicht das Kontaktende (58) gegen die Vorspannung in Richtung auf den Träger (20) zu bewegt ist.

2. Befestigungszusammenbau nach Anspruch 1, **dadurch gekennzeichnet, dass** der Träger (20) mit einer Öffnung (60) versehen ist, durch die sich der bogenförmige Drahthalter (54) erstreckt.

3. Befestigungszusammenbau nach Anspruch 1 oder 2, **dadurch gekennzeichnet, dass** der bogenförmige Drahthalter (54) einen bogenförmigen Basisabschnitt (54b) umfasst, und dass der Träger (20) eine dem Bodenbearbeitungswerkzeug (30) zugewandte Fläche hat und eine gegenüberliegende, rückwärtige Fläche, an der der bogenförmige Basisabschnitt (54b) abgestützt ist.

4. Befestigungszusammenbau nach einem der Ansprüche 1 bis 3, **dadurch gekennzeichnet, dass** der Träger (20) eine bogenförmige Nut (66) umfasst, und dass der bogenförmige Drahthalter (54) einen bogenförmigen Abschnitt aufweist, der der Form der Nut (66) entspricht und den Drahthalter (54) in der Nut (66) hält, wobei das Kontaktende (58) gegenüber der Nut (66) versetzt ist.

5. Befestigungszusammenbau nach einem der Ansprüche 1 bis 4, **dadurch gekennzeichnet, dass** die Kontaktfläche (58) einen Schlitz (72) im Befestigungsabschnitt (36) umfasst, der eine rückwärtige Kante umfasst, die das Kontaktende (58) berührt, wenn sich das Bodenbearbeitungswerkzeug (30) in seiner Befestigungsposition und das Kontaktende (58) in der Verriegelungsposition befinden.

6. Befestigungszusammenbau nach einem der Ansprüche 1 bis 5, **dadurch gekennzeichnet, dass** der Befestigungsabschnitt (36) eine Führungs- und Trägerfläche (70) für den Drahthalter (54) umfasst, die einen Abschnitt des bogenförmigen Drahthalters (54) an einer vom Kontaktende (58) versetzten Stelle (54g) aufnimmt und das Kontaktende (58) während des Befestigens des Bodenbearbeitungswerkzeugs (30) zur Kontaktfläche (50) führt und das Kontaktende (58) in Ausrichtung mit der Kontaktfläche (50) abstützt.

7. Befestigungszusammenbau nach Anspruch 5 oder 6, **dadurch gekennzeichnet, dass** der Befestigungsabschnitt (36) eine Oberfläche (36t) umfasst, von der sich eine Kante nach unten erstreckt, und dass die Führungs- und Trägerfläche (70) einen erhabenen Abschnitt aufweist, der über die Oberfläche (36t) hinausragt.

8. Befestigungszusammenbau nach einem der Ansprüche 1 bis 6, **dadurch gekennzeichnet, dass** der Befestigungsabschnitt (36) ohne separat abzunehmende Befestigungselemente am Träger (20) fest anbringbar, insbesondere verkeilbar ist.

9. Befestigungszusammenbau nach einem der Ansprüche 1 bis 8, **dadurch gekennzeichnet, dass** der Befestigungsabschnitt (36) eine mittige, erhabene Fläche (120) in Vorwärtsrichtung vor der Ebene aufweist, in der der Befestigungsabschnitt (36) mit dem Bodenbearbeitungswerkzeug (30) verbunden ist.

10. Kombination aus einem Befestigungszusammenbau nach einem der vorhergehenden Ansprüche und einem Entfernungswerkzeug (80) zum Lösen des Kontaktendes (58) von der Kontaktfläche (50) und/oder einem Anbringungswerkzeug (100), das auf das Bodenbearbeitungswerkzeug (30) aufsetzbar ist und eine Stoßfläche (110) zur Aufnahme von Hammerschlägen beim Anbringen des Bodenbearbeitungswerkzeugs (30) auf dem Träger (20) umfasst.

## Claims

1. A mounting assembly (10) for a ground working tool (30), with a carrier (20), a mounting section (36), attached to the ground working tool (30), which can be fixed releasably on the carrier, and a retaining device (40) which prevents the ground working tool (30) coming off the carrier (20), **characterized in that** the retaining device (40) comprises a curved rod retainer (54) which is supported on the carrier (20) and has a contact end (58) offset relative to the carrier (20) and biased into a detent position in which it bears on a contact surface (50) of the mounting section (36) when the ground working tool (30) is attached and which prevents the ground working tool (30) moving out of the fixed position, so long as the contact end (58) is not moved against the bias in the direction of the carrier (20).

2. A mounting assembly according to claim 1, **characterized in that** the carrier (20) is provided with an opening (60), through which the curved rod retainer (54) extends.

3. A mounting assembly according to claim 1 or 2, **characterized in that** the curved rod retainer (54) comprises an arcuate base section (54b) and **in that** the carrier (20) has a surface facing the ground working tool (30) and an opposite, rear face on which the arcuate base section (54b) is supported.

4. A mounting assembly according to any of claims 1 to 3, **characterized in that** the carrier (20) has a curved groove (66) and **in that** the curved rod retainer (54) has curved section which corresponds to the shape of the groove (66) and holds the rod retainer (54) in the groove (66), wherein the contact end (58) is offset relative to the groove (66).

5. A mounting assembly according to any of claims 1 to 4, **characterized in that** the contact surface (58) comprises a slot (72) in the mounting section (36), which slot has a rear edge which contacts the contact end (58) when the ground working tool (30) is located in its fixing position and the contact end (58) is located in the locking position.

6. A mounting assembly according to any of claims 1 to 5, **characterized in that** the mounting section (36) has a guide and support surface (70) for the rod retainer (54), which receives a section of the curved rod retainer (54) at a place (54g) offset from the contact end (58) and guides the contact end (58) to the contact surface (50) during mounting of the ground working tool (30) and supports the contact end (58) in alignment with the contact surface (50).

7. A mounting assembly according to claim 5 or 6, **characterized in that** the mounting section (36) has a surface (36t) from which an edge extends downwards, and **in that** the guide and support surface (70) has a raised section which projects beyond the surface (36t).

8. A mounting assembly according to any of claims 1 to 6, **characterized in that** the mounting section (36) can be fixed, in particular wedged, on the carrier (20) without fixing elements which have to be removed separately.

9. A mounting assembly according to any of claims 1 to 8, **characterized in that** the mounting section (36) has a central, raised surface (120) ahead in the forward direction of the plane in which the mounting section (36) is connected to the ground working tool (30).

10. A combination of a mounting assembly according to any of the preceding claims and a removal tool (80) for releasing the contact end (58) from the contact surface (50) and/or a mounting tool (100), which can be fitted on the ground working tool (30) and comprises a striking surface (110) for accepting hammer blows when fitting the ground working tool (30) on the carrier (20).

## Revendications

1. Assemblage de fixation (10) pour un outil de travail du sol (30), avec un support (20), une section de fixation (36) reliée à l'outil de travail du sol (30), pouvant être fixée de manière détachable au dit support, et un dispositif de serrage (40), qui empêche que l'outil de travail du sol (30) se détache du support (20), **caractérisé en ce que** le dispositif de serrage (40) comporte un porte-fil en forme d'arc (54), appuyé sur le support (20), lequel porte-fil comprend une extrémité de contact (58) décalée par rapport au support (20), laquelle extrémité est précontrainte dans une position d'enclenchement, dans laquelle, lorsque l'outil de travail du sol (30) est fixé, elle repose contre une surface de contact (50) de la section de fixation (36), et qui empêche que l'outil de travail du sol (30) se déplace depuis la position fixée, aussi longtemps que l'extrémité de contact (58) n'est pas déplacée à l'encontre de la précontrainte en direction du support (20).

2. Assemblage de fixation selon la revendication 1, **caractérisé en ce que** le support (20) est pourvu d'une ouverture (60), à travers laquelle s'étend le porte-fil en forme d'arc (54).

3. Assemblage de fixation selon la revendication 1 ou 2, **caractérisé en ce que** le porte-fil en forme d'arc (54) comporte une section de base en forme d'arc (54b), et **en ce que** le support (20) présente une surface tournée vers l'outil de travail du sol (30) et une surface arrière, opposée, contre laquelle est appuyée la section de base en forme d'arc (54b).

4. Assemblage de fixation selon l'une quelconque des revendications 1 à 3, **caractérisé en ce que** le support (20) comporte une rainure en forme d'arc (66), et **en ce que** le porte-fil en forme d'arc (54) comprend une section en forme d'arc, qui correspond à la forme de la rainure (66) et serre le porte-fil (54) dans la rainure (66), l'extrémité de contact (58) étant décalée par rapport à la rainure (66).

5. Assemblage de fixation selon l'une quelconque des revendications 1 à 4, **caractérisé en ce que** la surface de contact (58) comporte une fente (72) dans la section de fixation (36), qui comporte une arête arrière, qui touche l'extrémité de contact (58) lorsque l'outil de travail du sol (30) se situe dans sa position de fixation et l'extrémité de contact (58) dans la position de verrouillage.

6. Assemblage de fixation selon l'une quelconque des revendications 1 à 5, **caractérisé en ce que** la section de fixation (36) comporte une surface de guidage et de support (70) pour le porte-fil (54), laquelle surface reçoit une section du porte-fil en forme d'arc (54) en un point (54g) décalé de l'extrémité de contact (58) et guide l'extrémité de contact (58) pendant la fixation de l'outil de travail du sol (30) vers la surface de contact (50) et appuie l'extrémité de contact (58) en alignement sur la surface de contact (50).

7. Assemblage de fixation selon la revendication 5 ou 6, **caractérisé en ce que** la section de fixation (36) comporte une surface (36t), depuis laquelle une arête s'étend vers l'arrière, et **en ce que** la surface de guidage et de support (70) comprend une section bosselée, qui dépasse de la surface (36t).

8. Assemblage de fixation selon l'une quelconque des revendications 1 à 6, **caractérisé en ce que** la section de fixation (36) peut être aménagée, en particulier clavetée fixement sur le support (20) sans éléments de fixation destinés à être retirés séparément.

9. Assemblage de fixation selon l'une quelconque des revendications 1 à 8, **caractérisé en ce que** la section de fixation (36) comprend une surface centrale (120), bosselée, dans la direction orientée vers l'avant, devant le plan dans lequel la section de fixation (36) est reliée à l'outil de travail du sol (30).

10. Combinaison composée d'un assemblage de fixation selon l'une des revendications précédentes et d'un outil de démontage (80) destiné à détacher l'extrémité de contact (58) de la surface de contact (50) et/ou d'un outil de montage (100), qui peut être appliqué sur l'outil de travail du sol (30) et comporte une surface de choc (110) destinée à recevoir des coups de marteau lorsque l'outil de travail du sol (30) est aménagé sur le support (20).
